# EUROPEAN PATENT SPECIFICATION

(11) **EP 2 830 356 B1**
(45) Date of publication and mention of the grant of the patent: **19.12.2018**
(21) Application number: 13306064.0
(22) Date of filing: 23.07.2013
(51) Int. Cl.: H04W 36/00, H04W 84/04, H04W 84/00

(54) **Apparatus, data server, vehicle, method, and computer program for configuring neighbor cell measurements of a mobile relay node**
Vorrichtung, Datenserver, Fahrzeug, Verfahren und Computerprogramm zur Konfiguration von Nachbarzellen-Messungen von mobilen Relaisknoten
Appareil, serveur de données, véhicule, procédé et programme informatique permettant de configurer des mesures de cellule voisine d'un noeud de relais mobile

(43) Date of publication of application: 28.01.2015
(73) Proprietor: Alcatel Lucent, 91620 Nozay (FR); Bayerische Motoren Werke Aktiengesellschaft, 80809 München (DE)
(72) Inventor: Möhlmann, Ulrich, 70435 Stuttgart (DE); Fertl, Peter, Dr., 80799 München (DE); Ritzenhoff, Rainer, 70435 Stuttgart (DE); Günster, Franz Josef, 70435 Stuttgart (DE); Gerlach, Frank, 70435 Stuttgart (DE); Wabner, Markus, 70435 Stuttgart (DE)
(74) Representative: 2SPL Patentanwälte PartG mbB

(56) References cited:
- EP-A1- 2 501 200
- WO-A1-2013/025166
- WO-A2-2012/096611
- US-A1- 2012 129 532
- US-A1- 2013 103 200

## Description

Embodiments of the present invention relate to communication networks, more particularly but not exclusively to measurement configurations for mobility management in cellular communication networks.

### Background

Demands for higher data rates for mobile services are steadily increasing. At the same time modern mobile communication systems as 3rd Generation systems (3G) and 4th Generation systems (4G) provide enhanced technologies, which enable higher spectral efficiencies and allow for higher data rates and cell capacities. Users of today's handhelds become more difficult to satisfy. While old feature phones generated only data or voice traffic, current smartphones, tablets, and netbooks run various applications in parallel that can fundamentally differ from each other. Compared to conventional phones, this application mix leads to a number of new characteristics. For example, highly dynamic load statistics result, where the average load is increasing. Moreover, the number of networks for voice and data access is also increasing, therewith roaming options between these networks become available when multiple network layers overlap or at network boundaries, respectively.

Today's network planning and deployment in cellular communication systems is based on fixed, stationary base stations. However, the cellular radio coverage inside of vehicles, e.g. cars, buses, trains, ships, planes, etc., is subject to changing Radio Frequency (RF) conditions and penetration losses due to the vehicle's body. For this reason, customers, who use their Consumer Electronics (CE) devices, e.g. smartphone, tablet, computer, inside vehicles to consume mobile broadband data or voice services, may perceive a severe Quality-of-Service (QoS) degradation.

WO2013025166 A1 discloses a relay node which may determine its mobility state as one of three or more different mobility states. Control information is determined based on the determined mobility state of the mobile relay node and an action is then performed or initiated based on the determined control information. The tree different mobility states may include moving, standing, and at least one additional mobility state. Example additional mobility states of the mobile radio node include: departing, arriving, or temporarily stopped.

### Summary

Embodiments are based on the finding that a relay node can be used to improve the cellular coverage in the vehicle and to connect multiple terminals inside of a vehicle. An aggregated connection can be provided to a stationary cellular communication system via a wireless backhaul link, e.g. using an external vehicle antenna. In the following the link between a stationary base station and an external antenna of a vehicle relay node will be denoted as relay link; the link between a relay node and end user terminals will be denoted as access link.

Such a relay node may, for example, correspond to a relay as defined in 3^{rd} Generation Partnership Project (3GPP) Release 10, a moving relay as currently discussed in 3GPP Release 12 study groups and in current research literature, a wireless repeater (analog or digital), or a femto cell with a wireless backhaul connection. In case of a femto cell, the wireless backhaul connection could be provided over a separate cellular communication terminal, e.g., a 2G/3G/4G modem. It is another finding that for the relay link and for the access link, respectively, the same or different frequency and spectrum resources can be used.

Note that in the following description of embodiments the term "femto cell" will be used as a synonym for the term "Home eNB" as used in 3GPP standards, for small cells, such as micro, pico, femto cells, etc., as well as relay nodes defined according to 3GPP Release 10 & following releases.

It is a further finding that femto cells and home eNBs evaluate their neighbor relations, i.e. relations to surrounding macro cells and other small cells, on a regular basis in order to be able to quickly trigger a handover of a mobile transceiver from a femto cell to a neighbor cell, e.g. a macro cell. Since the macro cell environment may change from time to time, the femto or small cell may evaluate its neighbor relations based on a sniffing procedure at the boot-up of the femto or small cell and usually also during nights. For example, 3GPP Technical Recommendation (TR) 36.921 Frequency Division Duplex (FDD) Home eNode B (HeNB) Radio Frequency (RF) requirements analysis, i.e. hybrid cell power management based on neighborhood sniffing, may be used for recognizing neighbor cell relations.

According to another finding this approach may be critical when directly used by vehicular relay nodes, since standard femto or small cells are considered stationary while vehicular relay nodes change their location more frequently. Hence, this concept may use a permanent sniffing procedure in order to detect the neighbor cell relations which are required and in order to initiate a fast handover procedure. More details on such handover procedures may be found in 3GPP Technical Specification (TS) 23.009 Handover procedures.

Embodiments are therefore based on the finding that such a sniffing procedure can be based on a state of movement of the vehicle. Embodiments may therefore provide apparatuses and methods to start, stop and adapt the sniffing procedure, i.e., to evaluate the cell neighbor relations of vehicular relay nodes based on information related to state of movement, for example, vehicle sensor and backend information. Embodiments may therewith take into account that when a vehicle is moving, no handover may be required since the driver or passengers may not exit the vehicle during this time. Therefore, the sniffing procedure or measurement procedure may only be activated when the driver or passengers may actually exit the vehicle.

Embodiments provide an apparatus operable to configure, or for configuring, neighbor cell measurements of a vehicular relay transceiver in a mobile communication system. In other words, the apparatus may be adapted to or operable in a mobile or vehicular relay transceiver; it may be operated or comprised in a mobile or vehicular relay transceiver. The apparatus is therefore also referred to as relay apparatus. Embodiments also provide a mobile or vehicular relay transceiver comprising such a relay apparatus. The relay transceiver is operable in a vehicle to relay information between a mobile transceiver associated with the relay transceiver and a base station transceiver of the mobile communication system.

The mobile communication system may, for example, correspond to one of the mobile communication systems standardized by the 3^{rd} Generation Partnership Project (3GPP), e.g. Global System for Mobile Communications (GSM), Enhanced Data rates for GSM Evolution (EDGE), GSM EDGE Radio Access Network (GERAN), High Speed Packet Access (HSPA), Universal Terrestrial Radio Access Network (UTRAN) or Evolved UTRAN (E-UTRAN), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms mobile communication system and mobile communication network are used synonymously.

The mobile communication system may comprise a plurality of transmission points or base station transceivers operable to communicate radio signals with a mobile transceiver. In embodiments, the mobile communication system may comprise mobile transceivers, relay station transceivers and base station transceivers. The relay station transceivers and base station transceivers can be composed of one or more central units and one or more remote units.

A mobile transceiver may correspond to a smartphone, a cell phone, User Equipment (UE), a laptop, a notebook, a personal computer, a Personal Digital Assistant (PDA), a Universal Serial Bus (USB) -stick, a tablet computer, a car, etc. A mobile transceiver or terminal may also be referred to as UE or user in line with the 3GPP terminology. A base station transceiver can be located in the fixed or stationary part of the network or system. A base station transceiver may correspond to a remote radio head, a transmission point, an access point, a macro cell, a small cell, a micro cell, a pico cell, a femto cell, a metro cell etc. The term small cell may refer to any cell smaller than a macro cell, i.e. a micro cell, a pico cell, a femto cell, or a metro cell. Moreover, a femto cell is considered smaller than a pico cell, which is considered smaller than a micro cell. A base station transceiver can be a wireless interface of a wired network, which enables transmission and reception of radio signals to a UE, mobile transceiver or relay transceiver. Such a radio signal may comply with radio signals as, for example, standardized by 3GPP or, generally, in line with one or more of the above listed systems. Thus, a base station transceiver may correspond to a NodeB, an eNodeB, a BTS, an access point, etc. A relay station transceiver may correspond to an intermediate network node in the communication path between a base station transceiver and a mobile station transceiver. A relay station transceiver may forward a signal received from a mobile transceiver to a base station transceiver, signals received from the base station transceiver to the mobile station transceiver, respectively.

The mobile communication system may be cellular. The term cell refers to a coverage area of radio services provided by a transmission point, a remote unit, a remote head, a remote radio head, a base station transceiver, relay transceiver or a NodeB, an eNodeB, respectively. The terms cell and base station transceiver may be used synonymously. In some embodiments a cell may correspond to a sector. For example, sectors can be achieved using sector antennas, which provide a characteristic for covering an angular section around a base station transceiver or remote unit. In some embodiments, a base station transceiver or remote unit may, for example, operate three or six cells covering sectors of 120° (in case of three cells), 60° (in case of six cells) respectively. Likewise a relay transceiver may establish one or more cells in its coverage area. A mobile transceiver can be registered or associated with at least one cell, i.e. it can be associated to a cell such that data can be exchanged between the network and the mobile in the coverage area of the associated cell using a dedicated channel, link or connection. A mobile transceiver may hence register or be associated with a relay station or base station transceiver directly or indirectly, where an indirect registration or association may be through one or more relay transceivers.

In embodiments the relay apparatus comprises a determination module operable to determine information related to a state of movement of the vehicle. In embodiments the determination module can be implemented as any means for determining, such as one or more determination devices, one or more determination units, etc. In some embodiments the determination module may be implemented in software or as a computer program which can be executed on accordingly adapted hardware, such as a processor, a Digital Signal Processor (DSP), a multi-purpose processor, etc. The relay apparatus further comprises a controller module operable to obtain information related to a measurement configuration for measuring a signal quality of a neighbor cell of the relay station transceiver based on the information related to the state of movement of the vehicle. In embodiments the controller module can be implemented as any means for controlling, such as one or more controller devices, one or more controller units, etc. In some embodiments the controller module may be implemented in software or as a computer program which can be executed on accordingly adapted hardware, such as a processor, a DSP, a multi-purpose processor, etc.

The information on the measurement configuration may correspond to information comprising details on how a measurement is carried out and it may, for example, comprise information on which quantity shall be measured and how often it shall be measured, e.g. in terms of a measurement cycle or a measurement rate. Moreover, the state of movement of the vehicle is taken into account. That is to say, in some embodiments the controller module can be operable to configure a measurement cycle for measuring the information related to the signal quality of the neighbor cell to a first less frequent cycle when the information related to the state of movement of the vehicle indicates a first higher velocity of the vehicle and the controller module can be operable to configure a measurement cycle for measuring the information related to the signal quality of the neighbor cell to a second more frequent cycle when the information related to the state of movement of the vehicle indicates a second lower velocity of the vehicle. In other words the first measurement cycle may be less frequent than the second measurement cycle, while the first velocity is higher than the second velocity. Hence, embodiments may enable a speed or velocity adaptive measurement configuration or sniffing procedure. Embodiments may provide the advantage the number of measurements in scenarios in which a handover is unlikely can be reduced and a higher efficiency of the overall system may be achieved.

In some embodiments, the measurement cycle may hence be further reduced the faster the vehicle is moving. For example, in an embodiment the measurement cycle may be configured or set to a first cycle for a range of low velocities of the vehicle and then the measurements may be switched off once the vehicles reaches a predetermined velocity threshold. That is to say, in some embodiments the controller module may be operable to switch measurements for measuring the information related to the signal quality of the neighbor cell off when the information related to the state of movement of the vehicle indicates a first higher velocity of the vehicle. The controller module can be further operable to switch measurements for measuring the information related to the signal quality of the neighbor cell on when the information related to the state of movement of the vehicle indicates a second lower velocity of the vehicle. Hence, in some embodiments neighbor cell measurements may only be carried out when the vehicle moves below a certain velocity or speed threshold, which may separate the above first higher velocity from the second lower velocity. Such embodiments may provide the advantage of a simple implementation since one measurement cycle can be switched on and off.

In embodiments, the signal quality of the neighbor cell may correspond to any quality measure. For example, the quality of the radio link may correspond to information related to one or more elements of the group of a pathloss, a Receive Signal Reception Power (RSRP), a Signal-to-Interference Ratio (SIR), a Signal-to-Noise Ratio (SNR), a Signal-to-Interference-and-Noise Ratio (SINR) or a Receive Signal Strength Indicator (RSSI). In general such a quality measure may indicate any measure representing an expected communication quality with the measured cell. Embodiments may therefore provide a more effective system as measurements may be carried out more frequently when a handover is actually possible based on the state of movement of the vehicle.

Further embodiments may provide a relay apparatus which further comprises a transceiver module for transmitting information related to the measurement configuration to the mobile transceiver and for receiving information related to a measurement result from the mobile transceiver. The transceiver module may correspond to any means for transmitting and/or receiving signals, e.g. one or more transceiver units, one or more transceiver devices, etc. In embodiments a transceiver module may comprise typical transceiver, i.e. transmitter and receiver, components. Such components may comprise one or more transmit and/or receive antennas, a low Noise Amplifier (LNA), a Power Amplifier (PA), one or more filters, a converter, a mixer, a duplexer, a diplexer etc. Hence, in some embodiments the relay transceiver may use and/or configure a mobile transceiver to carry out the measurements on a neighbor cell. In other embodiments the relay apparatus may use, e.g. by means of the transceiver module, its own measurements on the neighbor cell signals for obtaining the measurement configuration.

The information related to the state of movement may comprise one or more elements of the group of information related to a velocity of the vehicle, an acceleration or deceleration of the vehicle, a stopping of the vehicle, revolutions per minute of the vehicle's engine, an activation of a park distance control system of the vehicle, an activation of a hand brake of the vehicle, an opening or closing of vehicle's doors, camera data of the vehicle, radar data of the vehicle, LIght Detection and Ranging or Laser Imaging Detection and Ranging (LIDaR) data of a passenger of the vehicle, a detection of a parking maneuver of the vehicle, a detection of a passenger exiting the vehicle, or predicted values thereof. All these pieces of information or combinations thereof may be used in embodiments to base the measurement configuration on. Embodiments may provide the advantage that efficient use may be made of components or information available in a vehicle.

In some embodiments the determination module may be operable to determine the information related to the state of movement of the vehicle corresponding to information of a predicted state of movement of the vehicle. That is to say, according to some information it may, for example, be predicted that the vehicle is going to stop. For example, such prediction can be based on a deceleration of the vehicle or upon approaching a destination set in a navigation system. Embodiments making use of prediction may provide the advantage that measurement configurations can be adapted to the predicted state of movement of the vehicle and therefore be set in advance or in preparation. Hence, measurement result may already be available once the predicted state is reached. That is to say, in further embodiments the information on a predicted state of movement is based on location information of the vehicle or based on route information of the vehicle.

In some embodiments the relay apparatus further comprises an interface which is operable to communicate with a navigation system of the vehicle or a positioning device operable to determine the position of the vehicle. That is to say some embodiments may reuse information obtained from another device, such a separated positioning device, e.g. a Global Positioning System (GPS) device, using an interface. This may have the advantage that a better efficiency may be achieved due to reuse of components. In other embodiments the relay apparatus may comprise its own positioning device and therewith be independent from other components of the relay apparatus. In further embodiments the determination module can be operable to communicate with a data server. The determination module can then be operable to determine the information related to the state of movement of the vehicle or parts thereof from the data server. In other words, there are some embodiments wherein the information related to the state of movement of the vehicle is determined by reception from a data server. Such embodiments may provide the advantage that the information can be collected at a central point, wherein other entities may also provide information, such as an entry or exit sensor of a parking lot or garage. The information related to the state of movement of the vehicle may correspond to information related to one or more elements of the group of an entry gate of a parking lot, a parking garage or house, activity of charging plates or an activity of a charging terminal.

Embodiments may provide a data server operable to receive and store information related to one or more elements of the group of a velocity of the vehicle, an acceleration or deceleration of the vehicle, a stopping of the vehicle, revolutions per minute of a vehicle engine, an activation of a park distance control system of the vehicle, an activation of a hand brake of the vehicle, an opening or closing of vehicle doors, camera data of the vehicle, radar data of the vehicle, LIDaR data of a passenger of the vehicle, a detection of a parking maneuver of the vehicle, a detection of a passenger exiting the vehicle, an entry gate of a parking lot, a parking garage or house, activity of charging plates an activity of a charging terminal, or predicted values thereof, wherein the data server is operable to provide the information to a mobile relay transceiver. In embodiments the data server may correspond to any addressable network entity having an accordingly adapted storage capacity.

Embodiments provide a vehicle comprising the above described relay apparatus. Embodiments further provide a method for configuring neighbor cell measurements of a vehicular relay transceiver in a mobile communication system. The relay transceiver is operable in a vehicle to relay information between a mobile transceiver associated with the relay transceiver and a base station transceiver of the mobile communication system. The method comprises determining information related to a state of movement of the vehicle and obtaining information related to a measurement configuration for measuring a signal quality of a neighbor cell of the relay station transceiver based on the information related to the state of movement of the vehicle.

Embodiments further provide a computer program having a program code for performing one or more of the above described methods, when the computer program is executed on a computer or processor. A further embodiment is a computer readable storage medium storing instructions which, when executed by a computer, cause the computer to implement one of the methods described herein.

Embodiments may provide a concept to prepare handover in an efficient way and may thus reduce the latencies involved in the handover procedure. Moreover, it may allow for reducing the power consumption of a vehicular relay node.

### Brief description of the figures

Some other features or aspects will be described using the following non-limiting embodiments of apparatuses and/or methods and/or computer programs and/or computer program products by way of example only, and with reference to the accompanying figures, in which
Fig. 1 illustrates an embodiment of an apparatus for configuring a neighbor cell measurement;
Fig. 2 shows an embodiment in a vehicle in a communication network;
Fig. 3 shows a block diagram of a flow chart of an embodiment of a method for configuring a neighbor cell measurement; and
Fig. 4 shows a block diagram of a flow chart of another embodiment of a method for configuring a neighbor cell measurement.

### Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (*e*.*g*., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

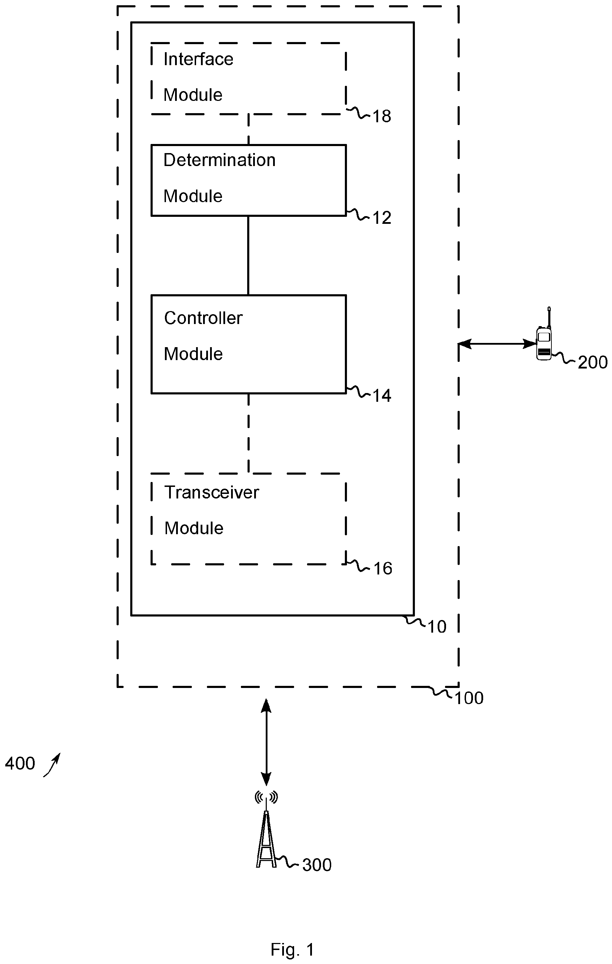

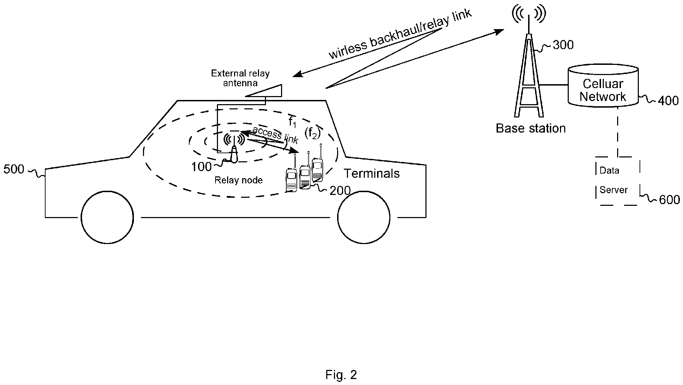

Optional components in the following figures are shown using dashed or dotted lines. Fig. 1 illustrates an embodiment of an apparatus 10 which is operable to configure neighbor cell measurements of a vehicular relay transceiver 100 in a mobile communication system 400. The mobile communication system 400 can be assumed to be an LTE or an LTE-A network in the following embodiment. The relay transceiver 100 corresponds to a femto cell inside a vehicle. The relay transceiver 100 is operable in a vehicle 500, as will be detailed with the help of Fig. 2, to relay information between a mobile transceiver 200 associated with the relay transceiver 100 and a base station transceiver 300 of the mobile communication system 400. The relay apparatus 10 comprises a determination module 12 operable to determine information related to a state of movement of the vehicle 500. The determination module 12 is coupled with a controller module 14. The controller module 14 is operable to obtain information related to a measurement configuration for measuring a signal quality of a neighbor cell of the relay station transceiver 100 based on the information related to the state of movement of the vehicle 500.

In the following the vehicle 500 is assumed to be a car, as shown in Fig. 2. Fig. 2 illustrates an embodiment of a vehicle 500, which is shown as an exemplified car, and which comprises a relay transceiver 100 with the apparatus 10 as shown in Fig. 1. The relay transceiver 100 is denoted as relay node 100 in Fig. 2. Fig. 2 shows a plurality of mobile transceivers 200 which communicate with the relay station 100 inside the vehicle 500 via an access link. The relay node 100 further comprises a relay antenna which is external to the vehicle 500 and which is used to communicate with the base station 300 via a relay link to which it is also referred to as wireless backhaul. Moreover, the communication network 400 is exemplified in Fig. 2 as being coupled with the base station transceiver 300, and which is also coupled to a data server 600.

In the following embodiment the controller module 14 is operable to configure a measurement cycle for measuring the information related to the signal quality of the neighbor cell to a first less frequent cycle when the information related to the state of movement of the vehicle 500 indicates a first higher velocity of the vehicle 500 and the controller module 14 is operable to configure the measurement cycle for measuring the information related to the signal quality of the neighbor cell to a second more frequent cycle when the information related to the state of movement of the vehicle 500 indicates a second lower velocity of the vehicle. That is to say, the higher the speed or velocity of the car 500 the less frequent are the measurements, i.e. the less frequent the sniffing procedure is triggered.

In another embodiment the controller module 14 is operable to switch measurements for measuring the information related to the signal quality of the neighbor cell off when the information related to the state of movement of the vehicle 500 indicates the first higher velocity of the vehicle 500. The controller module 14 is further operable to switch measurements for measuring the information related to the signal quality of the neighbor cell on when the information related to the state of movement of the vehicle 500 indicates the second lower velocity of the vehicle. In this embodiment a switching concept is used to activate and de-activate the sniffing procedure. That is to say, when the velocity of the car 500 falls below a certain threshold, e.g. 5 km/h, 10km/h, 20km/h, 50km/h, etc., the measurements or sniffing procedure is activated. Hence, the sniffing procedure could be activated when the vehicle velocity falls below a predefined threshold e.g., 10km/h, behaves according to a pre-defined velocity profile, the vehicle 500 decelerates according to a predefined profile, or the vehicle 500 stops.

In embodiments information related to the quality of the radio link can correspond to information related to one or more elements of the group of a path loss, an RSCP, an SIR, an SNR, an SINR, or an RSSI. In the following it will be assumed that path loss measurements are carried out to determine the quality of the radio link the mobile transceiver 200 experiences to the base station transceiver 300. For example, path loss measurements can be carried out by measuring an absolute reception power of the radio signal of the base station transceiver and dividing the absolute reception power by the transmit power of the base station transceiver 300, which is broadcast by the base station transceiver 300 as part of system information. The result of this procedure would then yield a measure for the path loss.

In a further embodiment the relay apparatus 10 comprises a transceiver module 16 for transmitting information related to the measurement configuration to the mobile transceiver 200 and for receiving information related to a measurement result from the mobile transceiver 200. The transceiver module 16 is shown in Fig. 1 as optional component being coupled to the controller module 14. Hence, in this embodiment the path loss measurement configuration is transmitted to one or more mobile transceivers 200, which then carry out the actual measurements and report the results back to the relay station 100. A mobile transceiver 200 is then used like a sensor. The measurement configuration may be indicated to a mobile transceiver 200 by using an indicator for one out of a plurality of pre-configured measurements. In yet another embodiment the measurements on the signal quality are carried out by the relay station 100 itself, e.g. using the transceiver module 16.

In embodiments the information related to the state of movement may comprise one or more elements of the group of information related to a velocity of the vehicle 500, an acceleration or deceleration of the vehicle 500, a stopping of the vehicle 500, revolutions per minute of the vehicle's 500 engine, an activation of a park distance control system of the vehicle 500, an activation of a hand brake of the vehicle 500, an opening or closing of vehicle's 500 doors, camera data of the vehicle 500, radar data of the vehicle 500, LIDaR data of a passenger of the vehicle 500, a detection of a parking maneuver of the vehicle 500, a detection of a passenger exiting the vehicle 500, or predicted values thereof. Hence, the determination module 12 may be operable to determine the information related to the state of movement of the vehicle 500 corresponding to information of a predicted state of movement of the vehicle 500. Furthermore, the information on a predicted state of movement may be based on location information of the vehicle 500 or based on route information of the vehicle 500.

That is to say, any vehicle sensor information, environment context information, or the combination of several may be used in an embodiment. In other words, the respective sensor data or state of movement information may be used when it allows anticipating that a passenger/driver may exit the vehicle 500 and it may then be used to trigger the sniffing procedure. A further example for state of movement information that may trigger the sniffing procedure is route information from a navigation system. The sniffing procedure may be triggered from the fact that the vehicle 500 has arrived at its target destination or may soon arrive there. In such embodiments the relay transceiver 100 may further comprise an interface 18, as shown as optional component in Fig. 1. The interface 18 is operable to communicate with a navigation system of the vehicle 500 or a positioning device operable to determine the position of the vehicle 500. Hence, another example of information related to the state of movement of the vehicle is the position, e.g. the GPS position. For example, information related to when the vehicle enters a certain geographical area, e.g., a parking lot, a parking house, a parking garage or event area. Hence, in further embodiments the information related to the state of movement of the vehicle 500 corresponds to information related to one or more elements of the group of an entry gate of a parking lot, a parking garage or house, activity of charging plates or an activity of a charging terminal.

Further examples of information related to the state of movement of the vehicle 500 are the vehicle speed, deceleration, revolutions per minute, the driver activates parking mode, Parking Distance Control (PDC) system is activated, activation of hand brake, information from a vehicle camera, radar and LIDaR systems that detect parking maneuvers or passengers exiting the vehicle, opening and closing of doors, etc.

In yet another embodiment and as indicated in Fig. 2, the determination module 12 is operable to communicate with the data server 600. The determination module 12 is operable to determine the information related to the state of movement of the vehicle 500 from the data server 600. For example, the transceiver module 16 may be used to connect to the data server 600. Moreover, additional information may be provided from the backend or data server 600. In another embodiment the vehicle 500 is wirelessly connected to the data server 600. At the same time other vehicles are also connected to the data server 600, and information obtained from the data server 600 is used to trigger the sniffing procedure. For example, other vehicles may detect a passenger exiting their vehicles and provide this information with time stamp and GPS position to the backend server 600, the other vehicles may use their sensor systems, such as radar, camera, LIDaR, etc., to determine said information. Moreover, such trigger information could also be provided from other road side infrastructure that is connected to the backend server 600. For example, the entry gates of a parking garage or parking house. In addition, the information could be provided by the inductive charging plates that may charge electric vehicles and which may be integrated in parking spots.

Fig. 2 thus also illustrates an embodiment of the data server 600. The data server 600 is operable to receive and store information related to one or more elements of the group of a velocity of the vehicle 500, an acceleration or deceleration of the vehicle 500, a stopping of the vehicle 500, revolutions per minute of a vehicle 500 engine, an activation of a park distance control system of the vehicle 500, an activation of a hand brake of the vehicle 500, an opening or closing of vehicle 500 doors, camera data of the vehicle 500, radar data of the vehicle 500, LIDaR data of a passenger of the vehicle 500, a detection of a parking maneuver of the vehicle 500, a detection of a passenger exiting the vehicle 500, an entry gate of a parking lot, a parking garage or house, activity of charging plates an activity of a charging terminal, or predicted values thereof, wherein the data server 600 is operable to provide the information to a mobile relay transceiver 100.

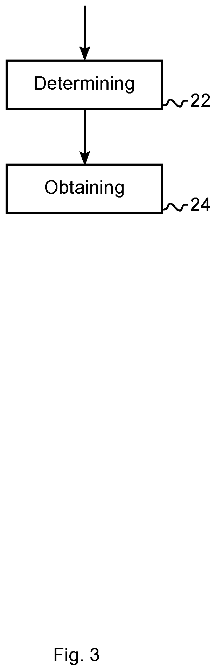

Fig. 3 illustrates a block diagram of an embodiment of a method for configuring neighbor cell measurements of the vehicular relay transceiver 100 in the mobile communication system 400. The relay transceiver 100 is operable in a vehicle 500 for relaying information between the mobile transceiver 200 associated with the relay transceiver 100 and the base station transceiver 300 of the mobile communication system 400. The method comprises determining 22 information related to a state of movement of the vehicle and obtaining 24 a measurement configuration for measuring a signal quality of a neighbor cell of the relay station transceiver 100 based on the information related to the state of movement of the vehicle 500.

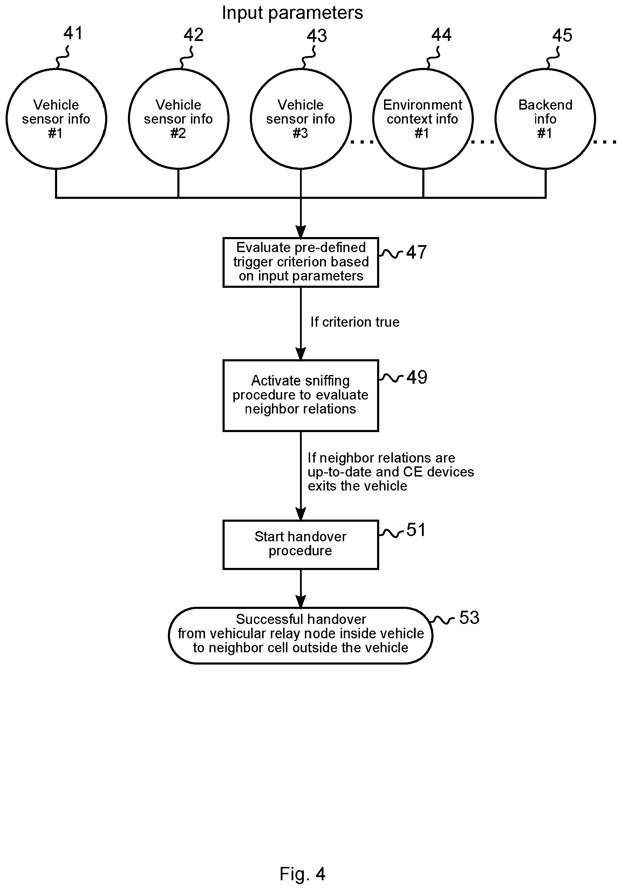

Fig 4 illustrates a block diagram of a flow chart of another embodiment. Fig. 4 shows three vehicular sensors 41, 42, and 43 which provide vehicle sensor information as input parameters. Moreover, environmental context information is provided by an according sensor 44 and backend information 45 from a data server 600 is provided as input parameters. The input information is evaluated in action 47 base on a trigger criterion which is pre-defined, e.g. such as whether each one of the input parameters fulfills certain sub-criteria that belong to a movement profile. If the criterion is true, i.e. it is fulfilled, the sniffing procedure or the measurements are activated in action 49. If neighbor relations are up-to-date and CE devices are to exit the vehicle 500, handover procedures are started by action 51. A successful handover from the vehicular relay node 100 inside the vehicle 500 to a neighbor cell outside the vehicle, such as the base station 300, may result as indicated by action 53.

A further embodiment is a computer readable storage medium storing instructions which, when executed by a computer, cause the computer to implement one of the methods described herein. Other embodiments are a computer program or a computer program product having a program code for performing anyone of the above described methods, when the computer program or computer program product is executed on a processor, computer, or programmable hardware.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for determining", "means for controlling", "means for transmitting", "means for receiving", etc., may be provided through the use of dedicated hardware, such as "a determiner", "a controller", "a transmitter", "a receiver", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

## Claims

1. An apparatus (10) operable to configure neighbor cell measurements of a vehicular relay transceiver (100) in a mobile communication system (400), the relay transceiver (100) being operable in a vehicle (500) to relay information between a mobile transceiver (200) associated with the relay transceiver (100) and a base station transceiver (300) of the mobile communication system (400), the apparatus (10) comprising
a determination module (12) operable to determine information related to a state of movement of the vehicle (500); and
a controller module (14) operable to obtain information related to a measurement configuration for measuring a signal quality of a neighbor cell of the relay transceiver (100) based on the information related to the state of movement of the vehicle (500),
wherein obtaining the information related to the measurement configuration comprises the controller module (14) being operable to configure a measurement cycle for measuring the information related to the signal quality of the neighbor cell to a first less frequent cycle when the information related to the state of movement of the vehicle (500) indicates a first higher velocity of the vehicle (500) and wherein the controller module (14) is operable to configure the measurement cycle for measuring the information related to the signal quality of the neighbor cell to a second more frequent cycle when the information related to the state of movement of the vehicle (500) indicates a second lower velocity of the vehicle;
a transceiver module (16) for transmitting information related to the measurement configuration to the mobile transceiver (200) and for receiving information related to a measurement result from the mobile transceiver (200) based on the transmitted information related to the measurement configuration,
wherein the controller module (14) is operable via the transceiver (16) to trigger a handover of the mobile transceiver (200) from the relay transceiver (100) to the neighbor cell based on the information related to the measurement result from the mobile transceiver (200).

2. The apparatus (10) of claim 1, wherein the controller module (14) is operable to switch measurements for measuring the information related to the signal quality of the neighbor cell off when the information related to the state of movement of the vehicle (500) indicates a first higher velocity of the vehicle (500) and wherein the controller module (14) is operable to switch measurements for measuring the information related to the signal quality of the neighbor cell on when the information related to the state of movement of the vehicle (500) indicates a second lower velocity of the vehicle.

3. The apparatus (10) of claim 1, wherein the quality of the radio link corresponds to information related to one or more elements of the group of a pathloss, a receive signal reception power, a signal-to-interference ratio, a signal-to-noise ratio, a signal-to-interference-and-noise ratio or a receive signal strength indicator.

4. The apparatus (10) of claim 1, wherein the information related to the state of movement comprises one or more elements of the group of information related to a velocity of the vehicle (500), an acceleration or deceleration of the vehicle (500), a stopping of the vehicle (500), revolutions per minute of the vehicle's (500) engine, an activation of a park distance control system of the vehicle (500), an activation of a hand brake of the vehicle (500), an opening or closing of vehicle's (500) doors, camera data of the vehicle (500), radar data of the vehicle (500), Light Detection and Ranging or Laser Imaging Detection and Ranging (LIDaR) data of a passenger of the vehicle (500), a detection of a parking maneuver of the vehicle (500), a detection of a passenger exiting the vehicle (500), or predicted values thereof.

5. The apparatus (10) of claim 1, the determination module (12) is operable to determine the information related to the state of movement of the vehicle (500) corresponding to information of a predicted state of movement of the vehicle (500).

6. The apparatus (10) of claim 5, wherein the information on a predicted state of movement is based on location information of the vehicle (500) or based on route information of the vehicle (500).

7. The apparatus (10) of claim 5, further comprising an interface (18) operable to communicate with a navigation system of the vehicle (500) or a positioning device operable to determine the position of the vehicle (500).

8. The apparatus (10) of claim 1, wherein the determination module (12) is operable to communicate with a data server (600) and wherein the determination module (12) is operable to determine the information related to the state of movement of the vehicle (500) from the data server (600).

9. The apparatus (10) of claim 8, wherein the information related to the state of movement of the vehicle (500) corresponds to information related to one or more elements of the group of an entry gate of a parking lot, a parking garage or house, activity of charging plates or an activity of a charging terminal.

10. A vehicle (500) comprising the apparatus (10) of claim 1.

11. A method for configuring neighbor cell measurements of a vehicular relay transceiver (100) in a mobile communication system (400), the relay transceiver (100) being operable in a vehicle (500) to relay information between a mobile transceiver (200) associated with the relay transceiver (100) and a base station transceiver (300) of the mobile communication system (400), the method comprising
determining (22) information related to a state of movement of the vehicle; obtaining (24) information related to a measurement configuration for measuring a signal quality of a neighbor cell of the relay transceiver (100) based on the information related to the state of movement of the vehicle (500);
wherein the obtaining (24) of the information related to the measurement configuration comprises configuring a measurement cycle for measuring the information related to the signal quality of the neighbor cell to a first less frequent cycle when the information related to the state of movement of the vehicle (500) indicates a first higher velocity of the vehicle (500) and configuring the measurement cycle for measuring the information related to the signal quality of the neighbor cell to a second more frequent cycle when the information related to the state of movement of the vehicle (500) indicates a second lower velocity of the vehicle;
transmitting information related to the measurement configuration to the mobile transceiver (200) and receiving information related to a measurement result from the mobile transceiver (200) based on the transmitted information related to the measurement configuration; and
triggering a handover of the mobile transceiver (200) from the relay transceiver (100) to the neighbor cell based on the information related to the measurement result from the mobile transceiver (200).

12. A computer program having a program code for performing the method of claim 11, when the computer program is executed on a computer or processor.

## Patentansprüche

1. Eine Vorrichtung (10), die wirksam ist, um Nachbarzellenmessungen eines Fahrzeug-Relais-Sendeempfängers (100) in einem Mobilkommunikationssystem (400) zu konfigurieren, wobei der Relais-Sendeempfänger (100) in einem Fahrzeug (500) wirksam ist, um Informationen zwischen einem mobilen Sendeempfänger (200), der dem Relais-Sendeempfänger (100) zugeordnet ist, und einem Basisstation-Sendeempfänger (300) des Mobilkommunikationssystems (400) zu übertragen, die Vorrichtung (10) umfassend
ein Bestimmungsmodul (12), das wirksam ist, um Informationen bezogen auf einen Zustand einer Bewegung des Fahrzeugs (500) zu bestimmen; und
ein Steuerungsmodul (14), das wirksam ist, um Informationen bezogen auf eine Messkonfiguration zum Messen einer Signalqualität einer Nachbarzelle des Relais-Sendeempfängers (100) basierend auf den Informationen bezogen auf den Zustand einer Bewegung des Fahrzeugs (500) zu bestimmen,
wobei das Erhalten von Informationen bezogen auf die Messkonfiguration umfasst, dass das Steuerungsmodul (14) wirksam ist, um einen Messzyklus zum Messen der Informationen bezogen auf die Signalqualität der Nachbarzelle auf einen ersten, weniger häufigen Zyklus zu konfigurieren, wenn die Informationen bezogen auf den Zustand einer Bewegung des Fahrzeugs (500) eine erste, höhere Geschwindigkeit des Fahrzeugs (500) anzeigen, und wobei das Steuerungsmodul (14) wirksam ist, um den Messzyklus zum Messen der Information bezogen auf die Signalqualität der Nachbarzelle auf einen zweiten, häufigeren Zyklus zu konfigurieren, wenn die Informationen bezogen auf den Zustand einer Bewegung des Fahrzeugs (500) eine zweite, niedrigere Geschwindigkeit des Fahrzeugs anzeigen;
ein Sendeempfängermodul (16) zum Übertragen von Informationen bezogen auf die Messkonfiguration an den mobilen Sendeempfänger (200) und zum Empfangen von Informationen bezogen auf ein Messergebnis von dem mobilen Sendeempfänger (200) basierend auf den übertragenen Informationen bezogen auf die Messkonfiguration,
wobei das Steuerungsmodul (14) wirksam ist, über den Sendeempfänger (16), ein Weiterreichen des mobilen Sendeempfängers (200) von dem Relais-Sendeempfänger (100) zu der Nachbarzelle basierend auf den Informationen auszulösen, die sich auf das Messergebnis von dem mobilen Sendeempfänger (200) beziehen.

2. Die Vorrichtung (10) gemäß Anspruch 1, wobei das Steuerungsmodul (14) wirksam ist, um Messungen zum Messen der Informationen bezogen auf die Signalqualität der Nachbarzelle auszuschalten, wenn die Informationen bezogen auf den Zustand einer Bewegung des Fahrzeugs (500) eine erste, höhere Geschwindigkeit des Fahrzeugs (500) anzeigen, und wobei das Steuerungsmodul (14) wirksam ist, um die Messungen zum Messen der Information bezogen auf die Signalqualität der Nachbarzelle einzuschalten, wenn die Informationen bezogen auf den Zustand einer Bewegung des Fahrzeugs (500) eine zweite, niedrigere Geschwindigkeit des Fahrzeugs anzeigen.

3. Die Vorrichtung (10) gemäß Anspruch 1, wobei die Qualität der Funkverbindung Informationen entspricht, die sich auf eines oder mehrere Elemente der Gruppe eines Pfadverlustes, einer Empfangssignal-Empfangsleistung, einem Signal-zu-Interferenz-Verhältnis, einem Signal-zu Rausch-Verhältnis, einem Signal-zu-Interferenz-und-Rausch-Verhältnis oder einem Empfangssignalstärke-Indikator beziehen.

4. Die Vorrichtung (10) gemäß Anspruch 1, wobei die Informationen bezogen auf den Zustand einer Bewegung ein oder mehrere Elemente der Gruppe aufweisen aus Informationen bezogen auf eine Geschwindigkeit des Fahrzeugs (500), eine Beschleunigung oder Verlangsamung des Fahrzeugs (500), ein Stoppen des Fahrzeugs (500), Umdrehungen pro Minute des Motors des Fahrzeugs (500), eine Aktivierung eines Parkdistanz-Steuerungssystems des Fahrzeugs (500), eine Aktivierung einer Handbremse des Fahrzeugs (500), ein Öffnen oder Schließen von Türen des Fahrzeugs (500), Kameradaten des Fahrzeugs (500), Radardaten des Fahrzeugs (500), Lichtdetektions- und Bereichsmess- oder Laser-Bilderzeugungs-Detektions und -Bereichsmess- (LIDaR-) Daten eines Insassen des Fahrzeugs (500), eine Detektion eines Parkmanövers des Fahrzeugs (500), ein Detektion eines Insassen, der aus dem Fahrzeug (500) aussteigt, oder vorhergesagte Werten derselben.

5. Die Vorrichtung (10) gemäß Anspruch 1, wobei das Bestimmungsmodul (12) wirksam ist, um die Informationen bezogen auf den Zustand einer Bewegung des Fahrzeugs (500) entsprechend den Informationen über einen vorhergesagten Zustand einer Bewegung des Fahrzeugs (500) zu bestimmen.

6. Die Vorrichtung (10) gemäß Anspruch 5, wobei die Informationen über einen vorhergesagten Zustand einer Bewegung auf Ortsinformationen des Fahrzeugs (500) basieren oder auf Routeninformationen des Fahrzeugs (500) basieren.

7. Die Vorrichtung (10) gemäß Anspruch 5, ferner umfassend eine Schnittstelle (18), die wirksam ist, um mit einem Navigationssystem des Fahrzeugs (500) oder einem Positionierungsbauelement zu kommunizieren, das wirksam ist, um die Position des Fahrzeugs (500) zu bestimmen.

8. Die Vorrichtung (10) gemäß Anspruch 1, wobei das Bestimmungsmodul (12) wirksam ist, um mit einem Datenserver (600) zu kommunizieren und wobei das Bestimmungsmodul (12) wirksam ist, um die Informationen bezogen auf den Zustand einer Bewegung des Fahrzeugs (500) aus dem Datenserver (600) zu bestimmen.

9. Die Vorrichtung (10) gemäß Anspruch 8, wobei die Informationen bezogen auf den Zustand einer Bewegung des Fahrzeugs (500) Informationen entsprechen, die sich auf ein oder mehrere Elemente der Gruppe beziehen aus einem Einfahrtstors eines Parkplatzes, einer Parkgarage oder einem Haus, einer Aktivität von Ladeplatten oder einer Aktivität eines Ladeanschlusses.

10. Ein Fahrzeug (500) umfassend die Vorrichtung (10) gemäß Anspruch 1.

11. Ein Verfahren zum Konfigurieren von Nachbarzellenmessungen eines Fahrzeug-Relais-Sendeempfängers (100) in einem Mobilkommunikationssystem (400), wobei der Relais-Sendeempfänger (100) in einem Fahrzeug (500) wirksam ist, um Informationen zwischen einem mobilen Sendeempfänger (200), der dem Relais-Sendeempfänger (100) zugeordnet ist, und einem Basisstation-Sendeempfänger (300) des Mobilkommunikationssystems (400) zu übertragen, das Verfahren umfassend
Bestimmen (22) von Informationen bezogen auf einen Zustand einer Bewegung des Fahrzeugs;
Erhalten (24) von Informationen bezogen auf eine Messkonfiguration zum Messen einer Signalqualität einer Nachbarzelle des Relais-Sendeempfängers (100) basierend auf den Informationen bezogen auf den Zustand einer Bewegung des Fahrzeugs (500);
wobei das Erhalten (24) der Informationen bezogen auf die Messkonfiguration ein Konfigurieren eines Messzyklus zum Messen der Informationen bezogen auf die Signalqualität der Nachbarzelle auf einen ersten, weniger häufigen Zyklus umfassen, wenn die Informationen bezogen auf den Zustand einer Bewegung des Fahrzeugs (500) eine erste, höhere Geschwindigkeit des Fahrzeugs (500) anzeigen und Konfigurieren des Messzyklus zum Messen der Information bezogen auf die Signalqualität der Nachbarzelle auf einen zweiten, häufigeren Zyklus, wenn die Informationen bezogen auf den Zustand einer Bewegung des Fahrzeugs (500) eine zweite, niedrigere Geschwindigkeit des Fahrzeugs anzeigen;
Übertragen von Informationen bezogen auf die Messkonfiguration an den mobilen Sendeempfänger (200) und Empfangen von Informationen bezogen auf ein Messergebnis von dem mobilen Sendeempfänger (200) basierend auf den übertragenen Informationen bezogen auf die Messkonfiguration; und
Auslösen eines Weiterreichens des mobilen Sendeempfängers (200) von dem Relais-Sendeempfänger (100) zu der Nachbarzelle basierend auf den Informationen, die sich auf das Messergebnis von dem mobilen Sendeempfänger (200) beziehen.

12. Ein Computerprogramm mit einem Programmcode zum Ausführen des Verfahrens gemäß Anspruch 11, wenn das Computerprogramm auf einem Computer oder Prozessor ausgeführt wird.

## Revendications

1. Appareil (10) utilisable pour configurer des mesures de cellule voisine d'un émetteur-récepteur de relais véhiculaire (100) dans un système de communication mobile (400), l'émetteur-récepteur de relais (100) étant utilisable dans un véhicule (500) pour relayer des informations entre un émetteur-récepteur mobile (200) associé à l'émetteur-récepteur de relais (100) et un émetteur-récepteur (300) de station de base du système de communication mobile (400), l'appareil (10) comprenant
un module de détermination (12) utilisable pour déterminer des informations relatives à un état de mouvement du véhicule (500) ; et
un module formant unité de commande (14) utilisable pour obtenir des informations relatives à une configuration de mesure pour la mesure d'une qualité de signal d'une cellule voisine de l'émetteur-récepteur de relais (100) en fonction des informations relatives à l'état de mouvement du véhicule (500),
l'obtention des informations liées à la configuration de mesure comprenant le fait que le module formant unité de commande (14) est utilisable pour configurer un cycle de mesure pour la mesure des informations liées à la qualité de signal de la cellule voisine sur un premier cycle moins fréquent lorsque les informations relatives à l'état de mouvement du véhicule (500) indiquent une première vitesse plus élevée du véhicule (500), et le module formant unité de commande (14) étant utilisable pour configurer le cycle de mesure pour la mesure des informations relatives à la qualité de signal de la cellule voisine sur un deuxième cycle plus fréquent lorsque les informations relatives à l'état de mouvement du véhicule (500) indiquent une deuxième vitesse moins élevée du véhicule ;
un module émetteur-récepteur (16) destiné à émettre des informations relatives à la configuration de mesure à destination de l'émetteur-récepteur mobile (200) et à recevoir des informations relatives à un résultat de mesure en provenance de l'émetteur-récepteur mobile (200) en fonction des informations émises relatives à la configuration de mesure,
le module formant unité de commande (14) étant utilisable, par le biais de l'émetteur-récepteur (16), pour déclencher un transfert de l'émetteur-récepteur mobile (200) depuis l'émetteur-récepteur de relais (100) vers la cellule voisine en fonction des informations relatives au résultat de mesure en provenance de l'émetteur-récepteur mobile (200).

2. Appareil (10) selon la revendication 1, dans lequel le module formant unité de commande (14) est utilisable pour désactiver les mesures pour la mesure des informations relatives à la qualité de signal de la cellule voisine lorsque les informations relatives à l'état de mouvement du véhicule (500) indiquent une première vitesse plus élevée du véhicule (500), et dans lequel le module formant unité de commande (14) est utilisable pour activer les mesures pour la mesure des informations relatives à la qualité de signal de la cellule voisine lorsque les informations relatives à l'état de mouvement du véhicule (500) indiquent une deuxième vitesse moins élevée du véhicule.

3. Appareil (10) selon la revendication 1, dans lequel la qualité de la liaison radio correspond à des informations relatives à un ou plusieurs éléments du groupe constitué par une perte de trajet, une puissance de réception de signal reçu, un rapport signal/brouillage, un rapport signal/bruit, un rapport signal/brouillage plus bruit ou un indicateur d'intensité de signal reçu.

4. Appareil (10) selon la revendication 1, dans lequel les informations relatives à l'état du mouvement comprennent un ou plusieurs éléments dans le groupe d'informations relatives à une vitesse du véhicule (500), une accélération ou une décélération du véhicule (500), un arrêt du véhicule (500), des tours par minute du moteur du véhicule (500), une activation d'un système d'aide au stationnement du véhicule (500), une activation d'un frein à main du véhicule (500), une ouverture ou une fermeture de portières du véhicule (500), des données de caméra du véhicule (500), des données radar du véhicule (500), des données de détection et télémétrie par la lumière ou de détection et télémétrie par imagerie laser (LIDaR) d'un passager du véhicule (500), une détection d'une manoeuvre de stationnement du véhicule (500), une détection de la sortie d'un passager du véhicule (500), ou des valeurs prédites de ces éléments.

5. Appareil (10) selon la revendication 1, dans lequel le module de détermination (12) est utilisable pour déterminer les informations relatives à l'état de mouvement du véhicule (500) correspondant à des informations sur un état de mouvement prédit du véhicule (500).

6. Appareil (10) selon la revendication 5, dans lequel les informations sur un état de mouvement prédit sont fonction d'informations de localisation du véhicule (500) ou fonction d'informations d'itinéraire du véhicule (500).

7. Appareil (10) selon la revendication 5, comprenant en outre une interface (18) utilisable pour communiquer avec un système de navigation du véhicule (500) ou un dispositif d'établissement de position utilisable pour déterminer la position du véhicule (500).

8. Appareil (10) selon la revendication 1, dans lequel le module de détermination (12) est utilisable pour communiquer avec un serveur de données (600), et dans lequel le module de détermination (12) est utilisable pour déterminer les informations relatives à l'état de mouvement du véhicule (500) à partir du serveur de données (600).

9. Appareil (10) selon la revendication 8, dans lequel les informations relatives à l'état de mouvement du véhicule (500) correspondent à des informations relatives à un ou plusieurs éléments dans le groupe constitué par un portillon d'entrée d'un parc de stationnement, d'un garage de stationnement ou d'une maison, une activité de plaques de charge ou une activité d'une borne de charge.

10. Véhicule (500) comprenant l'appareil (10) selon la revendication 1.

11. Procédé de configuration de mesures de cellule voisine d'un émetteur-récepteur de relais véhiculaire (100) dans un système de communication mobile (400), l'émetteur-récepteur de relais (100) étant utilisable dans un véhicule (500) pour relayer des informations entre un émetteur-récepteur mobile (200) associé à l'émetteur-récepteur de relais (100) et un émetteur-récepteur (300) de station de base du système de communication mobile (400), le procédé comprenant les étapes suivantes
détermination (22) d'informations relatives à un état de mouvement du véhicule ;
obtention (24) des informations liées à une configuration de mesure pour la mesure d'une qualité de signal d'une cellule voisine de l'émetteur-récepteur de relais (100) en fonction des informations relatives à l'état de mouvement du véhicule (500) ;
l'obtention (24) des informations liées à la configuration de mesure comprenant la configuration d'un cycle de mesure pour la mesure des informations liées à la qualité de signal de la cellule voisine sur un premier cycle moins fréquent lorsque les informations relatives à l'état de mouvement du véhicule (500) indiquent une première vitesse plus élevée du véhicule (500), et la configuration du cycle de mesure pour la mesure des informations relatives à la qualité de signal de la cellule voisine sur un deuxième cycle moins fréquent lorsque les informations relatives à l'état de mouvement du véhicule (500) indiquent une deuxième vitesse moins élevée du véhicule ;
émission d'informations relatives à la configuration de mesure à destination de l'émetteur-récepteur mobile (200) et réception d'informations relatives à un résultat de mesure en provenance de l'émetteur-récepteur mobile (200) en fonction des informations émises relatives à la configuration de mesure ; et
déclenchement d'un transfert de l'émetteur-récepteur mobile (200) depuis l'émetteur-récepteur de relais (100) vers la cellule voisine en fonction des informations relatives au résultat de mesure en provenance de l'émetteur-récepteur mobile (200).

12. Programme d'ordinateur comportant un code de programme destiné à mettre en oeuvre le procédé selon la revendication 11, lorsque le programme d'ordinateur est exécuté sur un ordinateur ou un processeur.
